# EUROPÄISCHE PATENTANMELDUNG

(11) **EP 0 644 363 A2**
(43) Veröffentlichungstag der Anmeldung: **22.03.1995**
(21) Anmeldenummer: 94113259.9
(22) Anmeldetag: 25.08.1994
(51) Int. Cl.: F16K 31/126, F16K 7/17, F16K 51/00

(54) **Absperrventil mit einem Stellantrieb**

(30) Priorität: 20.09.1993 CH 2829/93
(71) Anmelder: Georg Fischer Rohrleitungssysteme AG, CH-8201 Schaffhausen (CH)
(72) Erfinder: Heiniger, Martin, CH-8200 Schaffhausen (CH); Bannwarth, Walter, D-79787 Lauchringen (DE); Rudin, Max, CH-8212 Neuhausen a.Rhf. (CH)
(74) Vertreter: Szilagyi, Marianne

(57) **Zusammenfassung**

Der Stellantrieb (2) eines Absperrventils (1) weist Federpakete (12) auf, welche umfangsmässig gleichmässig verteilt im Gehäuse-Oberteil (8) angeordnet sind. Mehrere Federn (13) eines Federpaketes (12) werden in zwischen zwei Abstützteilen (15) mittels einer Spannschraube (14) vorgespannten Zustand in das Gehäuse-Oberteils (8) eingesetzt und beim Befestigen des Gehäuse-Oberteils (8) mittels Schrauben (9) auf dem Gehäuse-Unterteil (6) auf die Betriebs-Vorspannung weiter zusammengespannt.

## Beschreibung

Die Erfindung betrifft ein Absperrventil mit einem Stellantrieb, wie es im Oberbegriff von Anspruch 1 gekennzeichnet ist.

Absperrventile mit Stellantrieben der eingangs genannten Art sind bekannt und weisen eine gegen den Druck von Federn mit einem Druckmedium beaufschlagbare Steuer-Membrane auf, welche für eine Schliess- oder Öffnungsbewegung des Absperrorgans wie z.B. einer Membrane über einen Bolzen mit diesem wirkverbunden ist.

Die Montage der zwischen einem Gehäuseteil und der Steuer-Membrane nicht vorgespannten Federn früherer Ausführungen von Absperrventilen war fertigungtechnisch aufwendig. Die Gehäuseteile mussten bei der Montage von einer Vorrichtung zentriert und gehalten und gegen den Federdruck verschraubt werden. Ein werksexterner Eingriff zur Anderung der Federvorspannung war aus Sicherheitsgründen nicht möglich.

Aufgabe der vorliegenden Erfindung ist die Schaffung eines Absperrventils der eingangs genannten Art, welches auf eine einfach Art auf unterschiedliche Arbeitsdrücke umrüstbar ist.

Erfindungsgemäss wird diese Aufgabe durch die kennzeichnenden Merkmale von Anspruch 1 gelöst.

Besonders vorteilhafte Ausbildungen der Erfindung sind in den davon abhängigen Ansprüchen gekennzeichnet.

Die erfindungsgemässen Merkmale ermöglichen eine einfach Montage der Federpakete ohne zusätzliche Hilfsmittel, so dass auch die Anpassung der Federkraft an den Rohrleitungsdruck und somit Einsparung von Ansteuerenergie, d.h. kleinerer Ansteuerdruck auch beim Kunden gefahrlos und ohne grossen Aufwand durch Austausch von Federpaketen gewährleistet ist. Durch die Anpassung der Federkräfte wird die Lebensdauer der Membranen erhöht. Auch ein Ausbau des Ventils aus dem Rohrleitungssystems ist nicht mehr notwendig.

Die Erfindung ist in der beiliegenden Zeichnung beispielsweise dargestellt und nachfolgend beschrieben. Es zeigt:

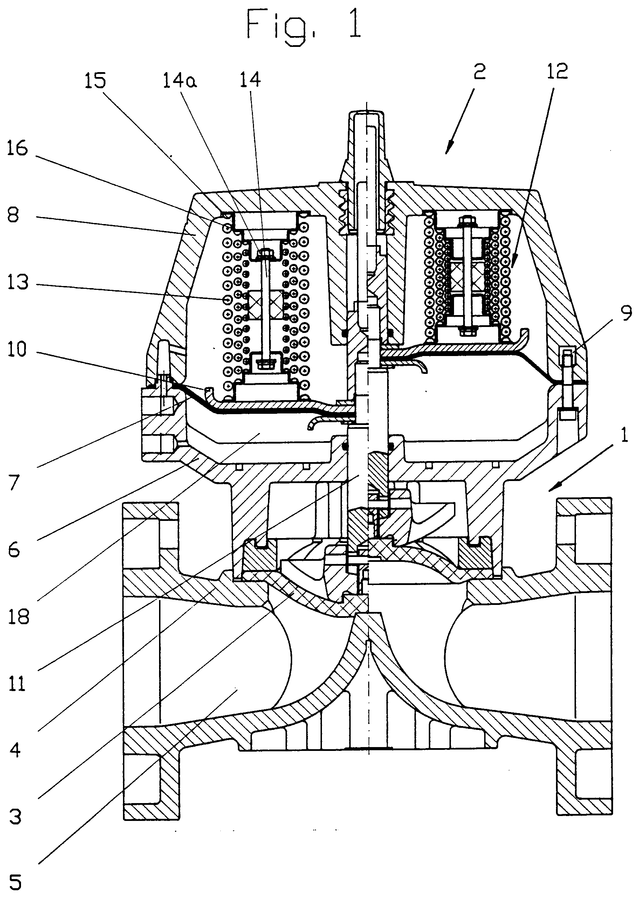

- Fig. 1: einen Schnitt druch ein Membranventil.
- Fig. 2: einen Schnitt durch ein Federpaket vor dem Einbau in das Membranventil in vergrösserter Darstellung.

Das als Membranventil 1 ausgebildete Absperrventil weist einen Stellantrieb 2 auf. Ein als Membrane 3 ausgebildetes Absperrorgan ist zwischen einem Gehäuse-Unterteil 6 des Stellantriebes 3 und dem mit einem Durchflusskanal 5 für das abzusperrende Durchflussmedium versehenen Gehäuse 4 eingespannt angeordnet. Eine Steuer-Membrane 7 bildet das Verstell-Element des Stellantriebes 2 und ist über einen Bolzen 11 mit der Membrane 3 wirkverbunden. Die Steuermembrane 7 ist zwischen dem Gehäuse-Unterteil 6 und einem Gehäuse-Oberteil 8 bzw. Deckel fest eingespannt, wobei die beiden Gehäuseteile 7, 8 mittels Schrauben 9 fest verbunden sind.

Ein auf der Oberseite der Steuermembrane 7 angeordneter Membranteller 10 ist fest mit dem Bolzen 11 verbunden. Zwischen dem Membranteller 10 und dem Gehäuseoberteil 8 sind umfangsmässig gleichmässig verteilt Federpakete 12 angeordnet.

Für eine gleichmässige Kraftverteilung sind mehrere, vorzugsweise sechs Federpakete 12 symmetrisch angeordnet, wobei jedoch mindestens zwei Federpakete 12 erforderlich sind.

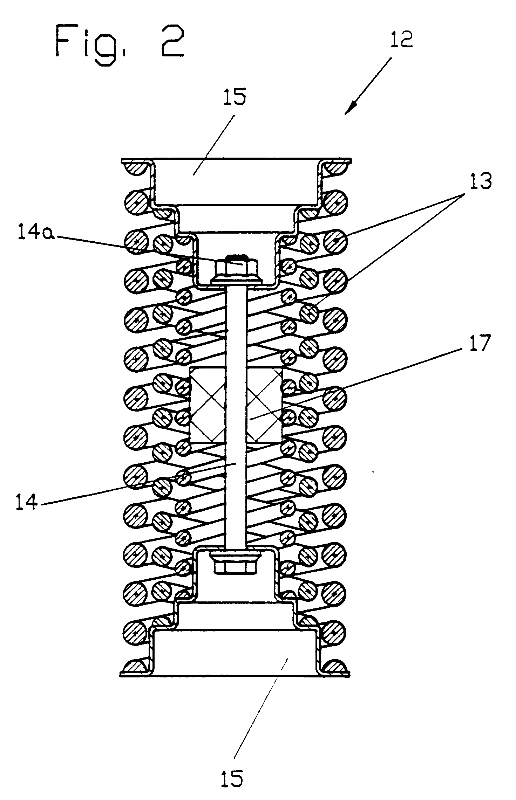

Jedes Federpaket 12 weist konzentrisch zu einer Spannschraube 14 und zwischen zwei Abstützteilen 15 angeordnete Federn 13 auf. Die Abstützteile 15 weisen für unterschiedlich lange Federn 13 stufenförmig angeordnete Abstützflächen 16 auf. Die Federn 13 bestehen jeweils aus einem Federdraht mit unterschiedlichem Drahtquerschnitt, wobei die äusserste Feder 13 den grössten und die innerste Feder 13 den kleinsten Drahtquerschnitt aufweist. Da die Federn 13 abhängig vom Drahtquerschnitt auf eine optimale Knicklänge ausgebildet sind, ergibt sich die entsprechende stufenförmige Anordnung der Abstützflächen 16 bei den Abstützteilen 15. Der Wicklungssinn von benachbarten Federn 13 kann jeweils gegensinnig gewählt werden, um bei gegenseitiger Berührung ein Verkeilen einzelner Windungen zu verhindern. (Siehe Fig. 2)

Die Federn 13 jedes Federpaketes 12 werden mittels der Spannschraube 14 und einer Mutter 14a vor dem Einsetzen in den Stellantrieb 2 vorgespannt, wobei dann die Mutter 14a z.B. durch Verkleben gegen Lösen gesichert wird. Die Grösse der Vorspannung wird so gewählt, dass die Gesamtlänge des vorgespannten Federpaketes so gross ist, dass das Gehäuseoberteil 8 nach Einsetzen der Federpakete 12 mittels den Schrauben 9 gegen das Gehäuse-Unterteil verspannt werden kann, wobei gleichzeitig die Federn 13 bis zur Betriebs-Vorspannung weiter mittels den Schrauben 9 zusammengedrückt werden. Dadurch ist eine Montage des Stellantriebes bzw. ein Auswechseln von Federpaketen 12 oder einzelnen Federn ohne zusätzliche Montage-Hilfsmittel gegeben.

Die in Betriebs-Vorspannung nicht verspannte Spannschraube 14 wird durch ein auf ihr mittig angeordnetes Dämpfungselement 17 aus Kunststoff und durch die innerste Feder 13 gehalten, so dass bei Betätigung des Stellantriebes keine Geräusche entstehen. (Siehe Fig. 2)
Bei dem beschriebenen Membranventil erfolgt die Absperrung des Durchflusses mittels der Membrane 3 durch Federdruck der Federpakete 12 und das Öffnen durch ein Druckmedium wie z.B. Druckluft, welches in eine durch die Steuermembrane 7 und das Gehäuse-Unterteil 6 gebildete Druckkammer 18 geleitet werden.

Fig. 2 zeigt ein einbaufertiges und auch leicht auswechselbares Federpaket 12, deren Federn 12 zwischen den Abstützteilen 15 mittels der Spannschraube 14 und der Mutter 14a vorgespannt gehalten sind.

Derartige Federpakete können als Bausatz zur Anpassung des Steuerdruckes an den Rohrleitungsdruck leicht auch nachträglich geliefert und eingebaut werden.

Aus dieser Figur 2 ist auch die gegenläufige Windungsrichtung jeweils zweier benachbarter Federn 13 ersichtlich.

## Patentansprüche

1. Absperrventil, insbesondere Membranventil mit einem Stellantrieb, welcher ein mittels eines Druckmediums gegen den Druck von Federn betätigbares Verstellelement aufweist, welches über einen Bolzen mit einem Absperrorgan wirkverbunden ist, und wobei die Federn als einzelne Federpakete zwischen einem Gehäuseteil und dem Absperrorgan angeordnet sind, dadurch gekennzeichnet, dass jedes Federpaket (12) mittels einer Spannschraube (14) zwischen zwei Abstützteilen (15) vorgespannte Federn (13) aufweist und im vorgespannten Zustand einbaubar ist.

2. Absperrventil nach Anspruch 1, dadurch gekennzeichnet, dass alle Federpakete (13) nach dem Einsetzen in ein Gehäuseoberteil (8) durch Anziehen der Gehäuseteil-Befestigungsschrauben (9) auf die Betriebs-Vorspannung weiter zusammenspannbar sind.

3. Absperrventil nach Anspruch 1 oder 2, dadurch gekennzeichnet, dass die Abstützteile (15) für die konzentrische Anordnung unterschiedlich langer Federn (13) stufenförmig angeordnete Abstützflächen (16) aufweisen.

4. Absperrventil nach einem der Ansprüche 1 bis 3, dadurch gekennzeichnet, dass die Federn (13) jedes Federpaketes (12) unterschiedliche Draht-Querschnitte aufweisen, wobei die Feder (13) mit dem grössten Drahtquerschnitt aussen und die Feder (13) mit dem kleinsten Drahtquerschnitt innen angeordnet ist.

5. Absperrventil nach Anspruch 4, dadurch gekennzeichnet, dass die Federn (13) jedes Federpaketes (12) abhängig vom Drahtquerschnitt unterschiedlich lang auf eine möglichst optimale Knicklänge ausgebildet sind.

6. Absperrventil nach einem der Ansprüche 1 bis 5, dadurch gekennzeichnet, dass das Verstellelement (7) als eine zwischen Gehäuseteilen (6, 8) einspannte Steuermembrane (7) mit einem Membranteller (10) ausgebildet ist, wobei die Federpakete (12) mit einem Abstützteil (15) auf dem Membranteller (10) abstützend angeordnet sind.

7. Absperrventil nach einem der Ansprüche 1 bis 6, dadurch gekennzeichnet, dass mindestens zwei, vorzugsweise sechs Federpakete (12) umfangsmässig gleichmässig verteilt angeordnet sind.

8. Absperrventil nach einem der Ansprüche 1 bis 7, dadurch gekennzeichnet, dass die Spannschraube (14) mit einem aus Kunststoff bestehenden Dämpfungselement (17) versehen ist, welches mit seinem Aussenumfang den Innendurchmesser der innersten Feder (13) berührend am Schraubenschaft angeordnet ist.

9. Absperrventil nach einem der Ansprüche 1 bis 8, dadurch gekennzeichnet, dass die Wicklungsrichtung jeweils zweier benachbarter Federn 13 eines Federpaketes gegenläufig ist.
